# EUROPEAN PATENT APPLICATION

(11) **EP 0 904 928 A1**
(43) Date of publication of application: **31.03.1999**
(21) Application number: 97390007.9
(22) Date of filing: 26.09.1997
(51) Int. Cl.: B29C 70/20, E04C 5/07

(54) **Manufacturing method of reinforced fiber sheet useful for reparing / reinforcing concrete structure**

(71) Applicant: Cho, Moon Soo, Seodaemoon-Gu, Seoul (KR)
(72) Inventor: Cho, Yong Jun, Milyang-Si, Kyung Nam (KR); Chung, Sam Tae, Milyang-Si, Kyung Nam (KR); Cho, Se Hyun, Milyang-Si, Kyung Nam (KR); Jeong, Il Soo, Changwon-Si, Kyung Nam (KR)
(74) Representative: Morelle, Guy Georges Alain

(57) **Abstract**

For obtaining the reinforced fiber sheet usable for repairing/reinforcing concrete structure having desirable characteristics such as superior durability, superior strength and anti-vibration, simultaneously with obtainable for the abbreviation of the reinforcing works, easy treatments, uniform quality with concrete structure, this invention provides the manufacturing method of the reinforced fiber sheet comprising arranging reinforcing fiber (11) on one surface of a support (10) that is of net shaped fabric infiltrated with thermoplastic resin and adjusting it flat and uniformly and then heating and pressurizing.

## Description

### PRIOR ART AND TECHNICAL FIELD

This invention relates to the manufacturing method of reinforced fiber sheet usable for repairing/reinforcing the concrete structure such as ferro-concrete bridge, elevated express highway, tunnel, and building or so like, and specially to the manufacturing method of reinforced fiber sheet having superior durability, superior strength and anti-vibration, simutaneously with obtaining the many advantages when reparing or reinforcing, such as abbreviation of processes and easy treatments, maintenance of uniformed quality with the concrete structure and increase of strength.

As reported, even if the duration of concrete structure is recognized as of semi-permanent, but after completion of construction its side effects have sometimes been reported, thus its repair or reinforment comes into important things.

The above-mentioned unsatisfactory phenomenon in the concrete structure is reported to be mainly due to overload or accumulation of overload due to increase of traffic amount, overloaded vehicles or more fast train and vibrations on the concrete structure, together with neutralization of the material as used, rust of the reinforced iron, break-up due to expansion of iron, peeling-off phenomenon on the surface, structural problems, usage of low class concrete or material, low qualified construction technique, chemical reaction with the salt in the air or with the contaminated materials and so like.

When the problems is found on the concrete structure after its completion, there are three methods to repair/reinforce it, respectively, steel panel reinforcing method, special fiber reinforcing method and the combinated method of said both methods.

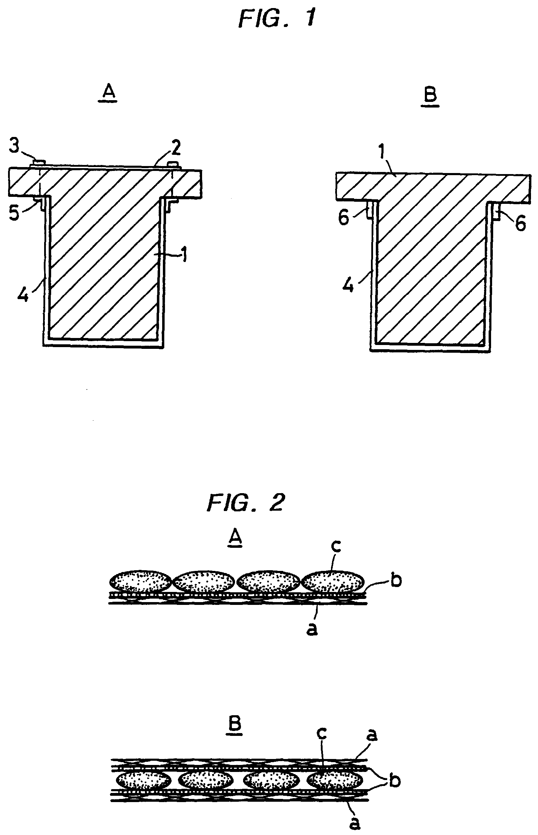

In the above three methods, the reinforcing method utilizing special fiber material is illustrated in the Fig 1 (A) and (B), in which (A) shows the structure that the anchor plate(2) is positioned on the concrete lump(1) and fastened with bolt(3), and reinforced fiber sheet(4) is attached to the side and bottom surface of the concrete lump(1) and then fastened by angle(5), whereas (B) shows the structure the reinforced fiber sheet(4) is attached to the side and bottom surfaces of the concrete lump(1) except the upper surface and then its top portion is fastened with bolt(6).

The reinforced fiber sheet used in the above example is that manufactured by applying the resin containing neither hardner(b) nor the adhesive on the one or both side of the supporter(a) which is usually made of film and so like, arranging the reinforcing fiber(c) having superior strength on it and then pressuring them, which is shown in Fig 2.

The reinforced sheet obtained as above is used for reinforcing the concrete structure by attaching it to concrete structure with the usage of resin which can be readily treated with operator.

When repairing/reinforcing the concrete structure, the resin used for attaching the reinforced fiber sheet to the structure in the working place is not the matrix resin containing the hardening accelerator(A type) for preserving the reinforcing resin in one direction, but the resin hardening in the normal temperature(B type) which is attached in the form of solid and then used when reparing.

When repairing/reinforcing, the used resin harden in the normal temperature(B type) is required to be in combination with the reinforced fiber sheet.

For that reason, in order to attain the reciprocal combination, many scrubbing process are required, but because of work life of matrix resin in the normal temperature, easy work and treatment can not be obtained so that it is still unsatisfactory.

Here, working life indicates interval from the time for the hardener to be input into resin to the time for the viscosity degree to be risen so as not to use.

At all events, insufficiency of scrubbing work results in partial infiltration, thus impossible to obtain the desired strength.

So to speak, the difficulty to combinate the resin in normal temperature with the reinforced fiber sheet incurs peeling-off phenomenon so that desirable strength cannot be obtained and its process management is difficult.

### BRIEF DESCRIPTION OF THE DRAWINGS

Fig 1 is the exemplary view showing the methods to repair/reinforce the concrete structure to be repaired or reinforced utilizing the steel panel, reinforced fiber or carbon fiber.
Fig 2 is the section view of conventional reinfored fiber sheet used in repairing/reinforcing the concrete structure, and in which
   (A) is the view showing the one sided supporter
   (B) is the view showing the both sided supporter
Fig 3 is the section view of the reinforced fiber sheet for repairing/reinforcing the concrete structure in accordance with this invention, in which
   (A) is the view showing one sided supporter
   (B) is the view showing both sided supporter
   (C) is the view showing both sided reinforcing fiber
Fig 4 (A), (B) and (C) is the schematic view briefly showing the devices for manufacturing the reinforced fiber sheet shown in Fig 3 (A), (B)and (C).

### * Numeral description of the drawings

10,12- reinforcing fiber supporter
11,13-reinforcing fiber

### DETAILED DESCRIPTION OF THE INVENTION

Accordingly, one object of this invention is to provide the reinforced fiber sheet for repairing/reinforcing the concrete structure, having the many desirable characteristics such as superior durability, superior strength and anti-vibration, simultaneously with obtainable for the abbreviation of the reinforcing works, easy treatments, uniformed quality with concrete structure.

This invention provides the reinforced fiber sheet for repairing/ reinforcing the concrete structure, in which the reinforcing fiber having superior strength has been arranged in one direction on one surface of the supporter that is of net-shaped fabric infiltrated with thermoplastic resin and then dried or net shaped fabric made of thermoplastic resin, and then after being adjusted flat and then together heated and pressurized by means of pressure roller.

Further, this invention provides the reinforced fiber sheet for repairing/ reinforcing the concrete structure, in which the reinforcing fiber having superior strength has arranged on one surface of the lower supporter and then on the reinforcing fiber, upper supporter has arranged on it, the supporter of which is net-shaped fabric infiltrated with thermoplastic resin and dried or net shaped fabric made of thermoplastic resin, and then together heated and pressurized by means of heater and pressure roll.

This invention provides the reinforced fiber sheet for repairing/ reinforcing the concrete structure, in which the reinforcing fiber having superior strength has arranged on both side of the supporter that is of net-shaped fabric infiltrated with thermoplastic resin and then dried or net shaped fabric made of thermoplastic resin, and then together heated, and thereafter pressurized .

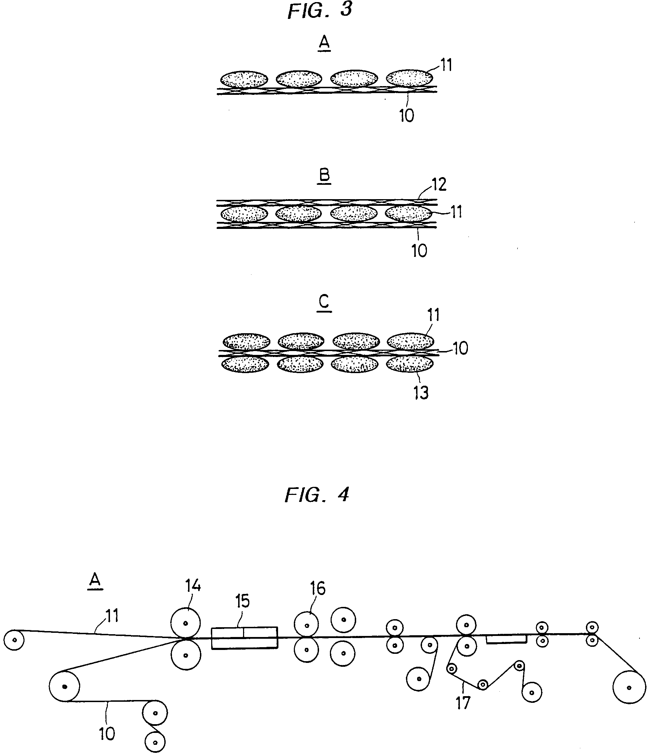

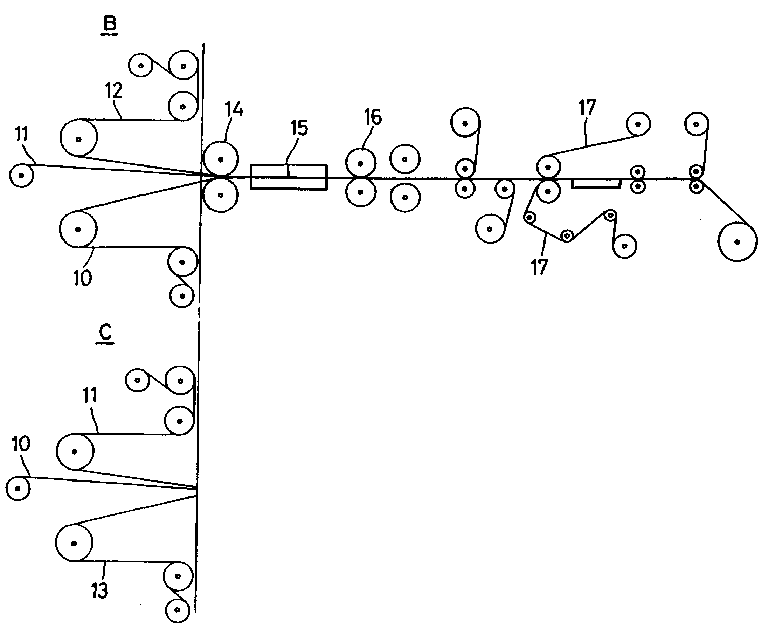

The more detailed description of this invention will be hereinafter explained in accompanying with the Fig 3.

Fig 3 (A) is the reinforced fiber sheet in which the reinforcing fiber(11) is arranged on the reinforcing fiber supporter(10) infiltrated with thermoplastic resin and dried, and then pressurized.

The above reinforcing supporter(10) is made of organic fiber such as carbon fiber, glass fiber, cabular fiber and aramyd fiber or the thermoplastic fiber be infiltrated with thermoplastic resin and then dried, or the thermoplastic net shaped fabric, the net shaped fabric have two or three axis direction.

For making the reinforced fiber sheet, as shown in the Fig 4, the rolled reinforcing fiber supporter(10) and rolled several threaded reinforcing fiber(11) are simultaneously unraveled, and together pass through the pressure roll (14), where the reinforcing fiber(11) is arranged in the one direction and adjusted flat, and then it entered into heater radiating the necessary heat and become attached each other, and thereafter finally pass thoughout the pressure roll(16) for finished product.

After completion of precesses, the surface of finished product is covered with the paper for protecting the surface be attached to the concrete structure from the outside materials.

Fig 3 (B) is the another embodiment of this invention in accordance with this invention, in which for making the reinforced fiber sheet the rolled upper and lower reinforcing fiber supporter(10,12) and several threaded reinforcing fiber (11) are unraveled simultaneously and together passed through the pressure roll (14), at the place where the reinforcing fiber(11) is arranged in the one direction and adjusted uniformly and plat, and then pass throughout the heater(15) for attachment of them each other and next to throughout the pressure roll (16) for finished product. After completion of precesses, the surface of finished product is covered with the paper for protecting the surface be attached to the concrete structure from the outside materials.

Fig 3 (C) is the another embodiment of this invention in accordance with this invention, in which the rolled reinforcing fiber supporter(10) and rolled upper and lower several threaded reinforcing fiber(11) are unraveled simultaneously and passed through the pressure roll(14), at the place where reinforcing fiber(11) is arranged in the one direction and adjusted uniformly and plat, and then it pass through the heater(15) and pressure roll(16) in order for finished product.

After the competion of process, cover sheet for protecting the surface is added to the reinforcded fiber supporter(10) for protecting the surface to be attached to the concrete structure from the other materials.

In the above all the embodiments, the inner state of the supporter(10,12) and reinforcing fiber(11,13) remains as a state of non-hard and non-adhesive so that fluid resin for repairing/reinforcing can be readily and qietly infiltrated into between the threads of the reinforcing fiber, thus possible to obtain the desired strength.

The oval figure of the reinforcing fiber(11,13) in the Fig 3 is to explain the state of the the reinforcing fiber(11,13) when pressurized.

For reparing or reinforcing, fluid resin harden in the normal temperature is added to the surface of concrete structure and then the sheet is attached on it, and thereafter the scrubbing work follows. At that time, the wave of the reinforcing fiber is required to be transverse to the concrete structure. Further fluid resin harden in the normal temperature is once again added and the last scrubbing is performed.

As explained above, this invention does not adopt the the both usage of previous infiltrated resin(type A) and fluid resin harden in the normal temperature(type B) on the reinforced fiber sheet, instead use only fluid resin (type B) harden in the normal temperature.

The fluid resin harden in the normal temperature used as above can be infiltrated qietly into the reinforcing fiber supporter(10) or reinforcing fiber(11) and then attribute to attach it to the surface of concrete structure.

The reinforced fiber sheet provided in accordance with this invention is used by adding the heat to the its surface, thus flexible and dried . Therefore, many advantages such as easy treatment, easy operation, works or so like can be obtained rather than the conventional sheet which is adhered by the usage of the thermosetting resin. In addition, owing to its flexibility, the attachment of it to the surface of concrete structure can be also easy.

And, the necessary infiltration condition required for the reinforcing fiber supporter to become dhesive is completely overcome. Furthermore, after repairing works, peeling-off phenomenon is restricted to the degree of maximum due to the superior attachment to the concrete structure by the usage of fluid resin hardening in the normal temperature, thus possible obtain the concrete reinforcing structure, together with abbreviation of work time and high degree of accuracy.

## Claims

1. The manufacturing method of reinforced fiber sheet comprising of arranging reinforcing fiber(11) on the one surface of the supporter that is of net shaped fabric infiltrated with thermoplastic resin and adjusting it flat and uniformly and then heating and pressurizing.

2. The manufacturing method of reinforced fiber sheet in accordance with with claim 1, characterized in that said reinforcing fiber supporter(10) having superior durability is made of organic fiber such as carbon fiber, glass fiber, cabular fiber and aramyd fiber or the thermoplastic fiber be infiltrated with thermoplastic resin and then dried, or the thermoplastic net shaped fabric, the net shaped fabric of which have two or three axis direction.

3. The manufacturing method of reinforced fiber sheet in accordance with with claim 1, characterized in that the second reinforcing fiber supporter is arranged on said reinforcing fiber and then together heated and pressurized.

4. The manufacturing method of reinforced fiber sheet in accordance with with claim 1, characterized in that the second reinforcing fiber is arranged on the other side of supporter in one derection and adjusted flat and uniformly , and then together heated and pressurized.
